(19) Europäisches Patentamt
European Patent Office
Office européen des brevets

(11) EP 2 182 530 A1

(12) **EUROPEAN PATENT APPLICATION**
published in accordance with Art. 153(4) EPC

(43) Date of publication:
**05.05.2010 Bulletin 2010/18**

(21) Application number: **08828300.7**

(22) Date of filing: **26.08.2008**

(51) Int Cl.:
***H01F 1/24** (2006.01)* ***H01F 1/26** (2006.01)*
***H01F 41/02** (2006.01)*

(86) International application number:
**PCT/JP2008/065168**

(87) International publication number:
**WO 2009/028486 (05.03.2009 Gazette 2009/10)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.08.2007 JP 2007224145**
**30.08.2007 JP 2007224154**

(71) Applicant: **Sumitomo Electric Industries, Ltd.**
**Osaka-shi, Osaka 541-0041 (JP)**

(72) Inventors:
- **MAEDA, Toru**
**Itami-shi**
**Hyogo 664-0016 (JP)**
- **KUSAWAKE, Kazushi**
**Itami-shi**
**Hyogo 664-0016 (JP)**

(74) Representative: **Grünecker, Kinkeldey, Stockmair & Schwanhäusser**
**Anwaltssozietät**
**Leopoldstrasse 4**
**80802 München (DE)**

# (54) SOFT MAGNETIC MATERIAL, DUST CORE, METHOD FOR PRODUCING SOFT MAGNETIC MATERIAL, AND METHOD FOR PRODUCING DUST CORE

(57) A soft magnetic material includes a plurality of composite magnetic particles (30) each including an iron-based particle (10) containing iron and an insulating coating film (20) surrounding a surface of the iron-based particle (10). The insulating coating film contains an organic group derived from an organic acid having at least one substance selected from the group consisting of titanium, aluminum, silicon, calcium, magnesium, vanadium, chromium, strontium, and zirconium. The at least one substance in the insulating coating film (20) is bonded to iron in the iron-based particles (10) through the organic group derived from the organic acid in the insulating coating film (20). Furthermore, a method for producing a soft magnetic material includes the steps of preparing the iron-based particles (10) containing iron and forming the insulating coating film (20) surrounding a surface of each of the iron-based particles (10). In the step of forming the insulating coating film, the organic acid containing the substance is brought into contact with the surfaces of the iron-based particles (10).

FIG. 1

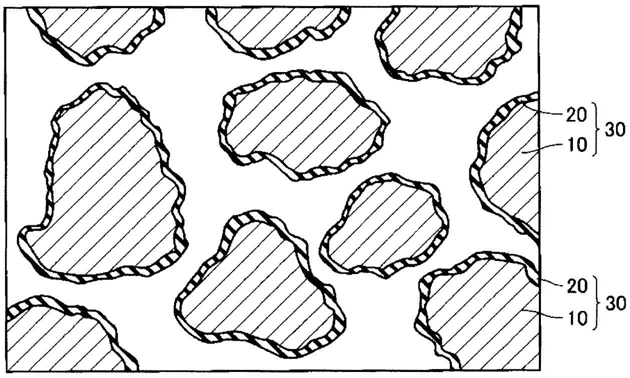


EP 2 182 530 A1

Printed by Jouve, 75001 PARIS (FR)

**Description**

Technical Field

The present invention relates to a soft magnetic material, a dust core, a method for producing a soft magnetic material, and a method for producing a dust core.

Background Art

A dust core formed by compacting a soft magnetic material is used in electrical apparatuses including, for example, solenoid valves, motors, and power supply circuits. The soft magnetic material is formed of a plurality of composite magnetic particles. Each of the composite magnetic particles includes an iron-based particle and a glassy insulating coating film covering the surface of the iron-based particle. The soft magnetic material is required to have magnetic properties such that the soft magnetic material provides a high flux density when a low magnetic field is applied thereto and such that the soft magnetic material is sensitive to a change of an external magnetic field.

In the case using the dust core in an alternating magnetic field, a loss of energy, i.e., iron loss, occurs. The loss is expressed by the sum of hysteresis loss and eddy current loss. To reduce the hysteresis loss, the coercive force Hc of the dust core may be reduced by removing distortions and dislocations in the iron-based particles to facilitate movement of a magnetic domain wall. To reduce eddy current loss, the electric resistivity p ofthe soft magnetic material may be increased by covering the iron-based particles with respective insulating coating films to ensure insulation between the iron-based particles.

To remove distortions and dislocations in the iron-based particles, a compacted dust core needs to be subjected to heat treatment at a high temperature of 400°C or higher, preferably 550°C or higher, and more preferably 650°C or higher. In the case where the dust core is subjected to heat treatment at a high temperature of 400°C or higher, however, the insulating coating films are disadvantageously damaged by heat, thus reducing the electrical resistivity p of the dust core and increasing the eddy current loss. Thus, the insulating coating films are required to have high heat resistance.

Here, as a method for forming such an insulating coating film, for example, a chemical conversion treatment method and a sol-gel method have been traditionally employed. A chemical conversion treatment method is disclosed in, for example, PCT Japanese Translation Patent Publication No. 2000-504785 (Patent Document 1). Patent Document 1 discloses a method including preparing a raw-material powder formed of a water-atomized iron powder or a sponge iron powder, subjecting the resulting mixture to treatment with an aqueous phosphoric acid solution in an organic solvent, and performing drying to form an insulating coating film.

Furthermore, a sol-gel method is disclosed in, for example, Japanese Unexamined Patent Application Publication Nos. 2005-206880 (Patent Document 2) and 2006-89791 (Patent Document 3). Patent Document 2 discloses a method including adding a metal alkoxide solution to a suspension containing a soft magnetic particle powder dispersed in an organic solvent, air-drying the soft magnetic material, and drying the soft magnetic material at 60°C to 120°C to form an insulating coating film. Patent Document 3 discloses a method including adding a mixed oxide sol solution of magnesium oxide and silicon dioxide, the sol solution being obtained by mixing an alkoxysilane solution and a magnesium alkoxide solution in a predetermined ratio, to a soft magnetic metal powder, agitating the mixture, and drying the mixture by heating to form a mixed oxide gel covering layer composed of magnesium oxide and silicon dioxide on the surface of a soft magnetic metal particle.

[Patent Document 1] PCT Japanese Translation Patent Publication No. 2000-504785
[Patent Document 2] Japanese Unexamined Patent Application Publication No. 2005-206880
[Patent Document 3] Japanese Unexamined Patent Application Publication No. 2006-89791

Disclosure of Invention

Problems to be Solved by the Invention

However, in a technique for forming an insulating coating film by the chemical conversion treatment method disclosed in Patent Document 1, there is a problem of low heat resistance because amorphous iron phosphate (-Fe-P-O-) is a basic structure.

To improve heat resistance, it is conceivable that a method in which ions of a metal such as aluminum that improves heat resistance are added to the aqueous phosphoric acid solution to form an insulating coating film having aluminum phosphate crystals will be employed. However, the addition of metal ions to the aqueous phosphoric acid solution causes the precipitation of aluminum phosphate in the aqueous solution, so that it is difficult to include the aluminum phosphate crystals in the insulating coating film.

Furthermore, in the techniques for forming insulating coating films by the sol-gel method disclosed in Patent Documents 2 and 3, there is a problem of insufficient heat resistance. In general, when iron-based particles are produced, OH groups are adsorbed on iron atoms of the surfaces of the iron-based particles, so that natural oxide films are formed on the surfaces of the iron-based particles. In Patent Documents 2 and 3, the metal alkoxides are hydrolyzed to form OH groups. The OH groups formed by hydrolysis and the OH groups present on the surfaces of the iron-based particles are subjected to dehydration condensation to form the insulating coating films on the surfaces of the iron-based particles. However, the density of the OH groups present on the surfaces of the iron-based particles is not so high. Thus, the bonding density of the iron atoms and the metal is reduced at interfaces between the iron-based particles and the insulating coating films. As a result, in the case where an article obtained by compacting the soft magnetic material including the insulating coating film formed by the sol-gel method is subjected to heat treatment at a high temperature, iron in the iron-based particles diffuses into the insulating coating film, disadvantageously leading to insufficient heat resistance.

Accordingly, it is an object of the present invention to provide a soft magnetic material having hysteresis loss reduced by improving the heat resistance of an insulating coating film and to provide a dust core.

It is another object of the present invention to provide a method for producing a soft magnetic material having hysteresis loss reduced by forming an insulating coating film having improved heat resistance and to provide a method for producing a dust core. Means for Solving the Problems

A soft magnetic material of the present invention includes a plurality of composite magnetic particles each including an iron-based particle containing iron, and an insulating coating film surrounding a surface of the iron-based particle. The insulating coating film contains an organic group derived from an organic acid having at least one substance selected from the group consisting of titanium (Ti), aluminum (Al), silicon (Si), calcium (Ca), magnesium (Mg), vanadium (V), chromium (Cr), strontium (Sr), and zirconium (Zr). The at least one substance in the insulating coating film is bonded to iron in the iron-based particles through the organic group derived from the organic acid in the insulating coating film.

According to the soft magnetic material of the present invention, since the organic group derived from the organic acid is contained, natural oxide films formed on the surfaces of the iron-based particles are removed. Thus, iron atoms of the iron-based particles are ionically bonded to the organic groups derived from the organic acid regardless of the number of OH groups of the natural oxide films formed on the surfaces of the iron-based particles. The bonding of the iron-based particles and the organic groups derived from the organic acid is not limited to the number of the OH groups of the natural oxide films, thus improving the bonding density of the iron atoms and the organic groups derived from the organic acid at interfaces between the iron-based particles and the insulating coating film. It is thus possible to suppress the diffusion of the iron atoms in the iron-based particles into the insulating coating film by the heat treatment of an article formed by compressing the soft magnetic material. Furthermore, the substance in the insulating coating film is covalently bonded to the organic groups derived from the organic acid, so that the substance is densely contained in the insulating coating film formed on the surfaces of the iron-based particles. The affinity of the substance for oxygen is higher than the affinity of iron for oxygen, thus suppressing the diffusion of oxygen atoms in the insulating coating films into the iron-based particles. It is thus possible to suppress the diffusion of the oxygen atoms in the insulating coating films into the iron-based particles by the heat treatment of the article formed by compressing the soft magnetic material. That is, the suppression of the diffusion of the iron atoms in the iron-based particles into the insulating coating films and the suppression of the diffusion of the oxygen atoms in the insulating coating films into the iron-based particles result in improvement in the heat resistance of the insulating coating films. As a result, the article formed by compacting the soft magnetic material can be subjected to heat treatment at a higher temperature. This eliminates distortions and dislocations in the iron-based particles, thereby reducing hysteresis loss.

In the soft magnetic material, the insulating coating films preferably have an average film thickness of 20 nm to 200 nm.

An average film thickness of the insulating coating films of 20 nm or more results in effective suppression of energy loss due to an eddy current. Furthermore, an average film thickness of the insulating coating films of 200 nm or less ensures that the proportion of the insulating coating film in the soft magnetic material is not excessively high. It is thus possible to prevent a significant reduction in the flux density of an article formed by compressing the soft magnetic material.

The term "average film thickness" refers to a thickness determined as follows: An equivalent thickness is determined in consideration of a film composition obtained by composition analysis (transmission electron microscope-energy dispersive X-ray spectroscopy (TEM-EDX)) and the amounts of elements obtained by inductively coupled plasma mass spectrometry (ICP-MS). Furthermore, the direct observation of the films with TEM images confirms that the order of magnitude of the equivalent thickness is appropriate.

In the soft magnetic material, the iron-based particles preferably have an average particle size of 5 μm to 500 μm.

An average particle size of the iron-based particles of 5 μm or more results in a reduction in coercive force. An average particle size of 500 μm or less results in a reduction in eddy current loss. Furthermore, it is possible to suppress a reduction in the compaction property of a mixed powder during compacting. Thus, the density of an article

formed by compacting is not reduced, so that the fact that the handling of the article becomes difficult can be prevented.

The term "average particle size of the iron-based particles" refers to a particle size at which the sum of the masses of the particles starting from the smallest diameter side reaches 50% of the total mass of the particles in a histogram of the particle size, i.e., 50% particle size.

In the soft magnetic material, preferably, the insulating coating film is a first insulating coating film, and the soft magnetic material further comprises another insulating coating film surrounding a surface of the first insulating coating film, in which another insulating coating film is composed of at least one selected from thermoplastic resins, thermosetting resins, and salts of higher fatty acids.

The first insulating coating film is protected by another insulating coating film. It is thus possible to reduce damage to the insulating coating film during compacting the soft magnetic material, thereby further improving the heat resistance of the insulating coating films as a whole. Furthermore, another insulating coating film increases the strength of the bonding of the composite magnetic particles together, the composite magnetic particles including the iron-based particles and the insulating coating films, thereby providing high strength.

A dust core according to the present invention is produced from the soft magnetic material described above. According to the dust core of the present invention, the soft magnetic material includes the insulating coating films with improved heat resistance. Thus, hysteresis loss can be reduced by performing heat treatment at a higher temperature to eliminate distortions and dislocations in the iron-based particles.

A method for producing a soft magnetic material according to the present invention includes the steps of preparing iron-based particles containing iron and forming an insulating coating film surrounding a surface of each of the iron-based particles. In the step of forming the insulating coating film, an organic acid containing at least one substance selected from the group consisting of titanium (Ti), aluminum (Al), silicon (Si), calcium (Ca), magnesium (Mg), vanadium (V), chromium (Cr), strontium (Sr), and zirconium (Zr) is brought into contact with the surface of each of the iron-based particles.

According to the method for producing a soft magnetic material of the present invention, natural oxide films formed on the surfaces of the iron-based particles can be removed by bringing the organic acid containing the substance described above into contact with the surfaces of the iron-based particles. Thus, iron atoms in the iron-based particles react with the organic acid without limitation of the number of OH groups of the natural oxide films formed on the surfaces of the iron-based particles. Hence, the iron atoms and the organic groups derived from the organic acid are ionically bonded with a high bonding density at interfaces between the insulating coating films and the iron-based particles. It is thus possible to suppress the diffusion of the iron atoms in the iron-based particles into the insulating coating films by performing heat treatment of an article formed by compacting the soft magnetic material.

Furthermore, the substance is covalently bonded to the organic acid. The iron atoms react with the organic acid to form ionic bonds, so that the substance is densely contained in the insulating coating films formed. The affinity of the substance for oxygen is higher than the affinity of iron for oxygen, thus suppressing the diffusion of oxygen atoms in the insulating coating films into the iron-based particles. It is thus possible to suppress the diffusion of the oxygen atoms in the insulating coating films into the iron-based particles by the heat treatment of the article formed by compressing the soft magnetic material.

That is, the suppression of the diffusion of the iron atoms in the iron-based particles into the insulating coating films and the suppression of the diffusion of the oxygen atoms in the insulating coating films into the iron-based particles result in improvement in the heat resistance of the insulating coating films. As a result, the article formed by compacting the soft magnetic material can be subjected to heat treatment at a higher temperature. This eliminates distortions and dislocations in the iron-based particles, thereby reducing hysteresis loss.

Preferably, the method for producing a soft magnetic material further includes a step of subjecting the insulating coating film to heat treatment after the step of forming the insulating coating film.

This results in the vaporization of a carbon element contained in the organic acid to separate the carbon element, thereby further improving the heat resistance of the insulating coating films formed.

Preferably, in the method for producing a soft magnetic material, in the step of forming the insulating coating film, insulating coating film having an average film thickness of 20 nm to 200 nm is formed.

An average film thickness of the insulating coating films of 20 nm or more results in effective suppression of energy loss due to an eddy current. Furthermore, an average film thickness of the insulating coating films of 200 nm or less ensures that the proportion of the insulating coating film in the soft magnetic material is not excessively high. It is thus possible to prevent a significant reduction in the flux density of an article formed by compressing the soft magnetic material.

The term "average film thickness" refers to a thickness determined as follows: An equivalent thickness is determined in consideration of a film composition obtained by composition analysis (transmission electron microscope-energy dispersive X-ray spectroscopy (TEM-EDX)) and the amount of elements obtained by inductively coupled plasma mass spectrometry (ICP-MS). Furthermore, the direct observation of the films with TEM images confirms that the order of magnitude of the equivalent thickness is appropriate.

Preferably, in the method for producing a soft magnetic material, in the step of preparing the iron-based particles, iron-based particles having an average particle size of 5 μm to 500 μm are prepared.

An average particle size of the iron-based particles of 5 μm or more results in a reduction in coercive force. An average particle size of 500 μm or less results in a reduction in eddy current loss. Furthermore, it is possible to suppress a reduction in the compaction property of a mixed powder during compacting. Thus, the density of an article formed by compacting is not reduced, so that the fact that the handling of the article becomes difficult can be prevented.

The term "average particle size of the iron-based particles" refers to a particle size at which the sum of the masses of the particles starting from the smallest diameter side reaches 50% of the total mass of the particles in a histogram of the particle size, i.e., 50% particle size.

Preferably, the method for producing a soft magnetic material further includes a step of forming another insulating coating film surrounding a surface of the insulating coating film, in which in the step of forming another insulating coating film, another insulating coating film composed of at least one selected from thermoplastic resins, thermosetting resins, and salts of higher fatty acids.

The formation of another insulating coating film results in the protection of the first insulating coating film by another insulating coating film. It is thus possible to reduce damage to the insulating coating film during compacting the soft magnetic material, thereby further improving the heat resistance of the insulating coating films as a whole. Furthermore, another insulating coating film increases the strength of the bonding of the composite magnetic particles together, the composite magnetic particles including the iron-based particles and the insulating coating films, thereby providing high strength.

A method for producing a dust core according to the present invention includes the steps of producing a soft magnetic material by any one of the methods for producing a soft magnetic material described above, compacting the soft magnetic material into an article, and subjecting the article to heat treatment.

According to the method for producing a dust core of the present invention, the soft magnetic material is produced by the method for producing a soft magnetic material described above, thus improving the heat resistance of the insulating coating films. Thus, hysteresis loss can be reduced by performing the heat treatment at a higher temperature to eliminate distortions and dislocations in the iron-based particles.

Advantages

According to the soft magnetic material and the dust core of the present invention, the insulating coating films have improved heat resistance, thus reducing hysteresis loss.

According to the method for producing a soft magnetic material and the method for producing a dust core of the present invention, the insulating coating films have improved heat resistance, thus reducing hysteresis loss.

Brief Description of Drawings

[Fig. 1] Figure 1 is a schematic view of a soft magnetic material according to an embodiment of the present invention.
[Fig. 2] Figure 2 is an enlarged cross-sectional view of a dust core according to an embodiment of the present invention.
[Fig. 3] Figure 3 is a schematic view of a soft magnetic material according to another embodiment of the present invention.
[Fig. 4] Figure 4 is an enlarged cross-sectional view of a dust core according to another embodiment of the present invention.
[Fig. 5] Figure 5 shows a sequence of steps of a method for producing a dust core according to an embodiment of the present invention.
[Fig. 6] Figure 6 is a schematic view of an iron-based particle.
[Fig. 7] Figure 7 is an enlarged schematic view of region R1 shown in Fig. 6.

Reference Numerals

10 iron-based particle, 20, 20a, 20b insulating coating film, 30 composite magnetic particle

Best Modes for Carrying Out the Invention

Embodiments of the present invention will be described with reference to the drawings. In the drawings, the same or equivalent portions are designated using the same reference numerals, and descriptions are not redundantly

repeated.

Figure 1 is a schematic view of a soft magnetic material according to an embodiment of the present invention. As shown in Fig. 1, the soft magnetic material according to this embodiment includes a plurality of composite magnetic particles 30 each having an iron-based particle 10 and an insulating coating film 20 surrounding the surface of the iron-based particle 10.

Figure 2 is an enlarged cross-sectional view of a dust core according to an embodiment of the present invention. The dust core shown in Fig. 2 is produced by compacting the soft magnetic material shown in Fig. 1 and performing heat treatment. As shown in Figs. 1 and 2, in a dust core according to this embodiment, the plural composite magnetic particles 30 are bonded to each other, for example, with an organic substance (not shown) or by engagement of irregularities of the composite magnetic particles 30.

In the soft magnetic material and the dust core according to this embodiment, the iron-based particles 10 contain iron and are composed of, for example, iron (Fe), an iron (Fe)-silicon (Si)-based alloy, an iron (Fe)-aluminum (Al)-based alloy, an iron (Fe)-nitrogen (N)-based alloy, an iron (Fe)-nickel (Ni)-based alloy, an iron (Fe)-carbon (C)-based alloy, an iron (Fe)-boron (B)-based alloy, an iron (Fe)-cobalt (Co)-based alloy, an iron (Fe)-phosphorus (P)-based alloy, an iron (Fe)-nickel (Ni)-cobalt (Co)-based alloy, or an iron (Fe)-aluminum (Al)-silicon (Si)-based alloy. The iron-based particles 10 may be composed of an elemental metal or an alloy. The iron content is preferably 50% by mass or more. More preferably, the iron-based particles 10 are composed of pure iron with an iron content of 99% by mass or more.

The iron-based particles 10 preferably have an average particle size of 5 $\mu$m to 500 $\mu$m. An average particle size of the iron-based particles 10 of 5 $\mu$m or more results in a reduction in coercive force. An average particle size of 500 $\mu$m or less results in a reduction in eddy current loss. Furthermore, it is possible to suppress a reduction in the compaction property of a mixed powder during compacting. Thus, the density of an article formed by compacting is not reduced, so that the fact that the handling of the article becomes difficult can be prevented.

The insulating coating films 20 serve as insulating layers arranged between the iron-based particles 10. Covering the iron-based particles 10 with the insulating coating films 20 can increase the electrical resistivity p of the dust core formed by compacting the soft magnetic material. This can suppress the flow of an eddy current across the iron-based particles 10, thereby reducing the eddy current loss of the dust core.

Each of the insulating coating films 20 contains an organic group derived from an organic acid having at least one substance (M) selected from the group consisting of titanium, aluminum, silicon, calcium, magnesium, vanadium, chromium, strontium, and zirconium. The affinity of any substance (M) for oxygen is higher than the affinity of iron for oxygen. It is thus possible to prevent the cleavage of the bond between the substance (M) and oxygen, thereby preventing the transfer of the substance (M) and oxygen in the insulating coating films 20 into the iron-based particles 10 and preventing the transfer of iron in the iron-based particles 10 into the insulating coating films 20. That is, it is possible to prevent the metallization of the insulating coating films 20, thus suppressing a reduction in the electrical resistance of the insulating coating films 20. More preferably, each of the insulating coating films 20 contains at least one substance selected from the group consisting of aluminum, titanium, and magnesium because of a higher affinity for oxygen.

The organic acid typically has a carboxyl group and is represented by, for example, $A^1COOH$ (chemical formula 1). In chemical formula 1, COOH represents a carboxyl group, and $A^1$ represents a moiety left by removing the carboxyl group from the organic acid. When the substance is represented by M, the organic acid containing the substance (M) is represented by, for example, $M(A^2COOH)_n$ (chemical formula 2) or $M(OH)_x(A^3COOH)_{n-x}$ (chemical formula 3). In chemical formula 2, $A^2$ represents a moiety in which $A^1$ is bonded to the substance M, and n is equal to the valence of the substance M. In chemical formula 3, $A^3$ represents a moiety in which $A^1$ is bonded to the substance $M(OH)_x$, n is equal to the valence of the substance M, and x represents an integer smaller than n. In the case where iron (Fe) is bonded to chemical formula 2 or 3, $COO^-$ of the carboxyl group is chemically bonded to $Fe^{2+}$ to form a compound represented by $M(A^2COO)_nFe_{(n/2)}$ (chemical formula 4) or $M(OH)_x(A^3COO)_{n-x}Fe_{(n-x/2)}$ (chemical formula 5). In chemical formulae 4 and 5, for example, when n = 1, two carboxyl groups can be bonded to one Fe atom. In this case, the organic group derived from the organic acid containing the substance M is represented by $M(A^2COO\text{-})_n$ (chemical formula 6) or $M(OH)_x(A^3COO\text{-})_{n-x}$ (chemical formula 7). In addition, the organic group derived from the organic acid is represented by $A^2COO$- (chemical formula 8) or $A^3COO^-$ (chemical formula 9). That is, the substance (M) in the insulating coating films 20 is bonded to iron in the iron-based particles 10 through the organic group ($A^3COO$-, chemical formula 9) derived from the organic acid in the insulating coating films 20.

The organic group ($A^2COO^-$ or $A^3COO^-$, chemical formula 8 or 9) derived from the organic acid containing the substance M can be determined by, for example, nuclear magnetic resonance analysis (NMR), Raman spectroscopic analysis, infrared absorption spectrometry (FT-IR), or pyrolytic gas chromatography-mass spectrometry (Py-GCMS).

For example, the organic group ($A^3COO^-$, chemical formula 9) derived from lactic acid ($C_3H_6O_3$) containing titanium (Ti) is bonded to iron to form a compound represented by $Ti(OH)_2(OCHCH_3COO)_2Fe$. In the case where chemical formula 5, $M(OH)_x(A^3COO)_{n-x}Fe_{(n-x/2)}$, is $Ti(OH)_2(OCHCH_3COO)_2Fe$, the organic acid ($A^1COOH$, chemical formula 1) is $CH(OH)CH_3COOH$, the organic acid ($M(OH)_x(A^3COOH)_{n-x}$, chemical formula 3) containing the substance (M) is Ti $(OH)_2(OCHCH_3COOH)_2$, the organic group ($M(OH)_x(A^3COO^-)_{n-x}$, chemical formula 7) derived from the organic acid

containing the substance is $Ti(OH)_2(OCHCH_3COO^-)_2$, and the organic group ($A^3COO^-$, chemical formula 9) derived from the organic acid is $OCHCH_3COO^-$.

In the organic group derived from lactic acid having titanium, OH's that are covalently bonded to titanium may be subjected to dehydration condensation.

While chemical formulae 1 to 9 are described by taking the organic group derived from the monovalent organic acid containing a carboxyl group as an example, the organic group derived from the organic acid is not particularly limited to this. The organic group derived from the organic acid may be derived from an organic acid having a plurality of carboxyl groups or having another functional group such as an amino group. The term "organic acid" used here means an acidic organic compound.

Examples of the organic group ($M(A^2COO-)_n$ or $M(OH)_x(A^3COO^-)_{n-x}$, chemical formula 6 or 7) derived from the organic acid containing the substance (M) include an organic group ($[Al(OCH_2CHCOO)_3]^{3-}$) derived from lactic acid containing aluminum, an organic group ($[Ca(OCH_2CHCOO)_2]^{2-}$) derived from lactic acid containing calcium, an organic group ($[Mg(OCH_2CHCOO)_2]^{2-}$) derived from lactic acid containing magnesium, an organic group ($[Mg(CH_2COO)_2]^2$) derived from acetic acid containing magnesium, an organic group ($[Ca(COO)_2]^{2-}$) derived from formic acid containing calcium, and an organic group ($Ca[OC(CH_2COO)_3]_2{}^{6-}$ derived from citric acid containing calcium. Furthermore, an example of the organic acid having an amino group is an organic group ($Ti[O(C_4H_8)](OC_3H_7)_2[O(C_4H_8)(CH)(NH_2)COO^-]$) of an organic acid containing titanium (titanium aminate).

The insulating coating films 20 preferably have an average film thickness of 20 nm to 200 nm. An average film thickness of the insulating coating films 20 of 20 nm or more results in the prevention of the occurrence of a tunneling current and results in effective suppression of energy loss due to an eddy current. Furthermore, an average film thickness of the insulating coating films 20 of 200 nm or less ensures that the proportion of the insulating coating films 20 in the soft magnetic material is not excessively high. It is thus possible to prevent a significant reduction in the flux density of an article formed by compressing the soft magnetic material.

While the case where each of the composite magnetic particles constituting the soft magnetic material is covered with a single-layer insulating coating films is described above, each of the composite magnetic particles constituting the soft magnetic material may be covered with multiple layers of insulating coating films.

Figure 3 is a schematic view of another soft magnetic material according to an embodiment of the present invention. As shown in Fig. 3, with respect to another soft magnetic material according to this embodiment, each of the insulating coating films 20 includes an insulating coating film 20a as a first insulating coating film and an insulating coating film 20b as another insulating coating film. The insulating coating film 20a surrounds the surface of each of the iron-based particles 10. The insulating coating film 20b surrounds the surface of the insulating coating film 20a.

The insulating coating films 20a have substantially the same structure as the insulating coating films 20 shown in Figs. 1 and 2.

The insulating coating film 20b is preferably composed of at least one selected from thermoplastic resins, thermosetting resins, and salts of higher fatty acids. Examples of the thermoplastic resins include organic silicon compounds such as silicone resins, organic titanium compounds, thermoplastic polyimide, thermoplastic polyamide, thermoplastic polyamide-imide, polyphenylene sulfide, polyether sulfone, polyether imide, polyether ether ketone, high molecular weight polyethylene, and fully aromatic polyester. The high molecular weight polyethylene refers to polyethylene having a molecular weight of 100,000 or more. Examples of the thermosetting resins include thermosetting silicone resins, fully aromatic polyimide, and non-thermoplastic polyamide-imide. Examples of the salts of the higher fatty acids include zinc stearate, lithium stearate, calcium stearate, lithium palmitate, calcium palmitate, lithium oleate, and calcium oleate. Furthermore, these organic substances may be used in combination as a mixture.

In particular, from the viewpoint of further improving heat resistance, the insulating coating film 20b is preferably composed of at least one compound selected from organic silicon compounds and organic titanium compounds. A silicone resin has a high heat-resistance temperature. After heat treatment of the insulating coating film 20b composed of a silicone resin, the insulating coating film 20b contains decomposition residues of Si-O bonds and thus has a high ability to maintain insulation properties. Thus, more preferably, the insulating coating film 20b is composed of a silicone resin.

Figure 4 is an enlarged cross-sectional view of a dust core according to another embodiment of the present invention. The dust core shown in Fig. 4 is produced by compacting the soft magnetic material shown in Fig. 3 and performing heat treatment. As shown in Figs. 3 and 4, in the case of using the insulating coating film 20b composed of a resin, the resin is chemically changed during heat treatment. The plural composite magnetic particles 30 are bonded to each other with the insulating coating films 20b or by engagement of irregularities of the composite magnetic particles 30.

The soft magnetic material shown in Fig. 1 may further contain an additive (not shown). The dust core shown in Fig. 2 may further contain an organic substance (not shown) produced by heat treatment of the additive. For example, the additive is preferably made of at least one of metallic soap and an inorganic lubricant having a hexagonal crystal structure. These additives have high lubricity and thus improve the flowability of the iron-based particles 10.

Next, a method for producing the soft magnetic material shown in Fig. 1 and a method for producing the dust

core shown in Fig. 2 (organic acid method) will be described with reference to Fig. 5. Figure 5 shows a sequence of steps of a method for producing a dust core according to an embodiment of the present invention.

As shown in Fig. 5, first, the iron-based particles 10 containing iron are prepared (step S1). Specifically, iron-based particles having an iron content of, for example, 50% by mass or more are prepared. Preferably, iron-based particles composed of pure iron with an iron content of 99% by mass or more are prepared. The iron-based particles are subjected to heat treatment, for example, at a temperature of 400°C or more and less than 900°C. A large amount of distortions (dislocations and defects) is present in the iron-based particles 10 before the heat treatment. The heat treatment of the iron-based particles 10 can reduce the distortions. Note that the heat treatment may be omitted.

In the step (step S1) of preparing the iron-based particles 10, the iron-based particles 10 having an average particle size of 5 μm to 500 μm are preferably prepared. An average particle size of the iron-based particles 10 of 5 μm or more results in a reduction in coercive force. An average particle size of 500 μm or less results in a reduction in eddy current loss. Furthermore, it is possible to suppress a reduction in the compaction property of a mixed powder during compacting. Thus, the density of an article formed by compacting is not reduced, so that the fact that the handling of the article becomes difficult can be prevented.

Figure 6 is a schematic view of the iron-based particles 10. Figure 7 is an enlarged schematic view of region R1 shown in Fig. 6. As shown in Figs. 6 and 7, natural oxide films due to water in air are formed on surfaces of the iron-based particles 10. With respect to the natural oxide films and the iron-based particles 10, iron atoms ($Fe^{2+}$) on the surfaces of the iron-based particles 10 are covalently bonded to OH’. In the iron-based particles 10 including the natural oxide films formed on the surfaces thereof, the OH groups are not present in a ratio, i.e., $Fe^{2+}$:$OH^-$ = 1:2, but are present in a ratio lower than this. That is, the density of the OH groups present on the surfaces of the iron-based particles 10 is not very high.

Next, the insulating coating films 20 surrounding the surfaces of the iron-based particles 10 are formed (step S2). In the step (step S2) of forming the insulating coating films 20, an organic acid containing at least one substance (M) selected from the group consisting of titanium, aluminum, silicon, calcium, magnesium, vanadium, chromium, strontium, and zirconium is brought into contact with the surfaces of the iron-based particles 10. As a method for bringing the organic acid into contact, the organic acid may be applied to the surfaces of the iron-based particles 10. Alternatively, the iron-based particles 10 may be immersed in the organic acid.

The "substance (M)" is a substance having a higher affinity for oxygen than the affinity of iron for oxygen. Furthermore, with respect to the "organic acid containing the substance (M)" in this embodiment, the substance (M) is covalently bonded to the organic acid, and the organic acid has a carboxyl group (COOH) with H ionizable in an aqueous solution.

Specifically, an organic acid containing the substance (M), for example, titanium lactate ($Ti(OH)_2(OCH_3CHCOOH)_2$), aluminum lactate ($Al(OCH_2CHCOOH)_3$), calcium lactate ($Ca(OCH_2CHCOOH)_2$), magnesium lactate ($Mg(OCH_2CHCOOH)_2$), magnesium acetate ($Mg(CH_2COOH)_2$), calcium formate ($Ca(COOH)_2$), calcium citrate ($Ca[OC(CH_2COOH)_3]_2$), or titanium aminate ($Ti[O(C_4H_8)](OC_3H_7)_2[O(C_4H_8)(CH)(NH_2)COOH]$) is prepared. A method for preparing the organic acid containing the substance (M) is not particularly limited.

Examples of an acidic group contained in an organic acid include formic acid ($-[COOH]_n$, acetic acid ($-[CH_3COOH]_n$), lactic acid ($-[OCH_3COOH]_n$), malic acid ($-[OCH(COOH)CH_2COOH]_n$), and citric acid ($-[OC(CH_2COOH)_3]_n$). Note that n is equal to the valence of the substance (M).

Then the iron-based particles 10 are immersed in the organic acid containing the substance (M), so that the organic acid containing the substance (M) is applied to the iron-based particles 10. For example, the application of titanium lactate ($Ti(OH)_2(OCH_3COOH)_2$) as the organic acid containing the substance to the iron-based particles 10 results in the formation of hydrogen ions ($H^+$) and a lactic acid ion ($Ti(OH)_2(OCH_3COO^-)_2$) formed by ionization ($COO^-$) of carboxyl groups (COOH) in titanium lactate as shown in chemical formula 10.

[Chem. 1]

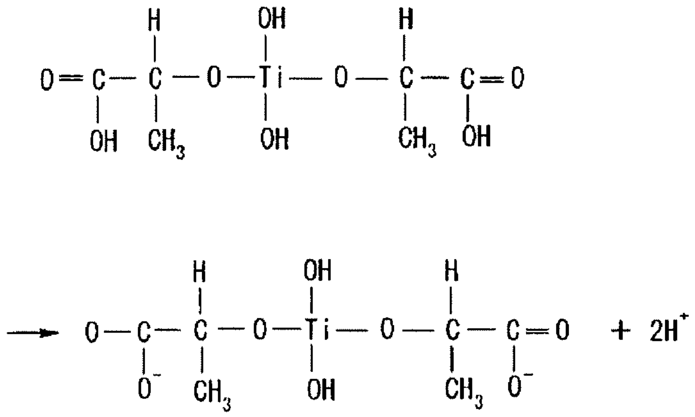

(chemical formula 10)

As shown in chemical formula 11 described below, the iron-based particles having the OH groups of the natural oxide films react with hydrogen ions formed by ionization of titanium lactate, so that the OH groups bonded to iron atoms in the iron-based particles are removed as water molecules from iron. In chemical formula 12, iron having the OH groups of the natural oxide films is represented by FeOH because the proportion of the OH groups formed described above is low with respect to iron.

[Chem. 2]

$$Fe-O-H + H^{+} \rightarrow Fe + H_2O$$

(chemical formula 11)

As shown in chemical formula 12, the hydrogen ions formed by ionization of titanium lactate react with iron, so that iron is dissolved as iron ions. Furthermore, iron atoms that are not bonded to the OH groups of the natural oxide films are dissolved as iron ions as shown in chemical formula 12.

[Chem. 3]

$$Fe + 2H^{+} \rightarrow Fe^{2+} + H_2$$

(chemical formula 12)

Ions of titanium lactate formed as shown in chemical formula 10 and iron ions formed as shown in chemical formula 12 are ionically bonded to each other as shown in chemical formula 13 described below. That is, the substance (M) in the insulating coating films 20 is bonded to iron in the iron-based particles 10 through $OCHCH_3COO^-$ as the organic group ($A^3COO^-$, chemical formula 9) derived from the organic acid in the insulating coating films 20.

[Chem. 4]

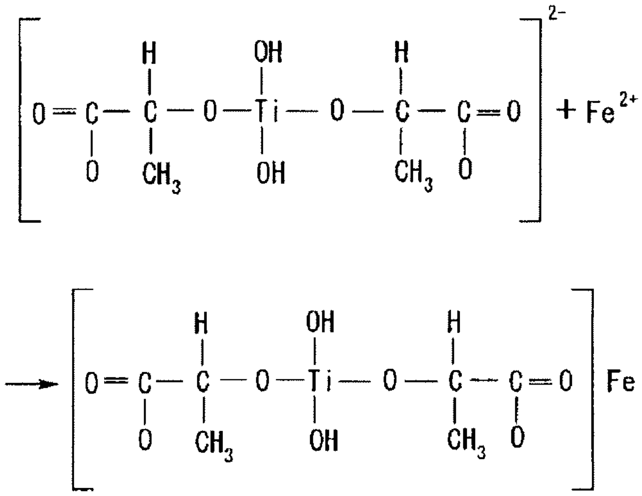

(chemical formula 13)

Dehydration condensation may occur when the substance (M) and iron are bonded to each other. This case is also included in the present invention. In this case, the insulating coating films 20 can be grown. For example, in the case where lactic acid containing titanium is brought into contact with the iron-based particles 10 to bond the organic group derived from the organic acid to iron, OH groups bonded to titanium are subjected to dehydration condensation as shown in chemical formula 14.

[Chem. 5]

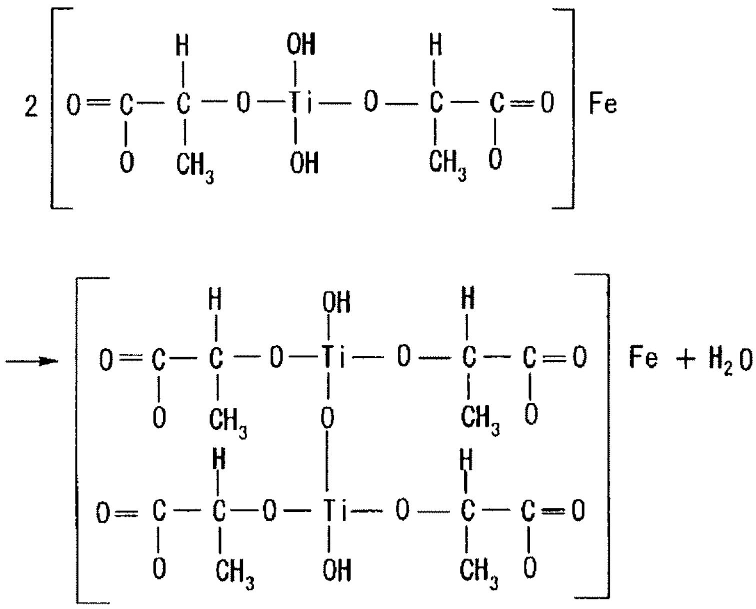

(chemical formula 14)

In the step (step S2) of forming the insulating coating film, insulating coating film 20 having an average film

thickness of 20 nm to 200 nm is preferably formed. An average film thickness of the insulating coating film 20 of 20 nm or more results in the prevention of the occurrence of a tunneling current and results in effective suppression of energy loss due to an eddy current. Furthermore, an average film thickness of the insulating coating film 20 of 200 nm or less ensures that the proportion of the insulating coating film 20 in the soft magnetic material is not excessively high. It is thus possible to prevent a significant reduction in the flux density of an article formed by compressing the soft magnetic material.

In the case of forming two-layer insulating coating film as shown in Fig. 3, the insulating coating film is defined as a first insulating coating film 20a, and another insulating coating film 20b surrounding the surface of the first insulating coating film 20a is further formed. In this case, the another insulating coating film 20b is preferably composed of at least one selected from thermoplastic resins, thermosetting resins, and salts of higher fatty acids.

Specifically, each of the iron-based particles 10 including the first insulating coating films 20a is mixed with a resin to form another insulating coating film 20b. A mixing method is not particularly limited. Any of methods such as a mechanical alloying method, vibration ball milling, planetary ball milling, mechanofusion, a coprecipitation method, a chemical vapor deposition method (CVD method), a physical vapor deposition method (PVD method), a plating method, a sputtering method, an evaporation method, and a sol-gel method, can be employed. A lubricant may be further added, as needed.

With respect to a method for producing the another insulating coating film 20b, in addition to the method described above, a method in which a silicone resin dissolved in an organic solvent is mixed or sprayed and then dried to remove the organic solvent or a method in which a liquid silicone resin is mixed or sprayed may be employed.

After the step (step S2) of forming the insulating coating film, the insulating coating film 20 is subjected to heat treatment (step S3). The heat treatment of the insulating coating film 20 results in the decomposition of carbon atom chains constituting the organic acid containing the substance (M) and the vaporization and separation of carbon (C) atoms. This heat treatment (step S3) is performed at a temperature at which carbon atoms are vaporized. For example, the heat treatment is performed in the range of a decomposition temperature of the insulating coating film 20 to a temperature at which the oxidation of the iron-based particles 10 does not occur. The temperature at which the oxidation of the iron-based particles 10 does not occur refers to, for example, a temperature when a reduction in saturation magnetization occurs. A reduction in the carbon content of the insulating coating film 20 by the heat treatment (step S3) further improves the heat-resistance temperature of the insulating coating film. Note that this step may be omitted.

A soft magnetic material according to this embodiment is produced through the foregoing steps (S1 to S3). In the case of producing a dust core according to this embodiment, further steps described below are performed.

Next, compacting the soft magnetic material provides a formed article (step S4). In the step (step S4) of forming the article, a powder of the soft magnetic material is filled into a metal mold and compacted at a pressure of, for example, 390 (MPa) to 1500 (MPa). As a result, the soft magnetic material powder is compacted to form the formed article including the insulating coating film 20 densely containing the substance (M). The compacting is preferably performed in an inert-gas atmosphere or a reduced-pressure atmosphere. In this case, it is possible to suppress the oxidation ofthe mixed powder due to oxygen in air.

Next, the article formed by compacting is subjected to heat treatment (step S5). In step S5, the heat treatment is performed in the range of, for example, 550°C to a pyrolysis temperature of the insulating coating film 20. A large amount of defects are present in the article formed by compacting. These defects can be eliminated by the heat treatment. The resulting dust core includes the insulating coating film 20 densely containing the substance (M) with heat resistance. It is thus possible to prevent the transfer of iron atoms of the iron-based particles 10 into the insulating coating film 20 even when the heat treatment is performed at a high temperature. Furthermore, the substance (M) having a high affinity for oxygen makes it possible to prevent the transfer of oxygen into the iron-based particles 10.

As described above, the dust core according to this embodiment as shown in Fig. 2 can be produced. Furthermore, in the case of using a soft magnetic material including two layers of the insulating coating films 20, a dust core as shown in Fig. 4 can be produced.

Next, the method for producing a dust core according to this embodiment is compared with a method for producing a dust core according to the related art, and the effect of this embodiment will be described.

First, a method for producing an insulating coating film by a chemical conversion treatment method will be described. In the chemical conversion treatment method (chemical conversion treatment method 1 in Table I), for example, the iron-based particles are immersed in an aqueous phosphoric acid solution. Natural oxide films formed on the surfaces of the iron-based particles are dissolved by phosphoric acid. When the reaction reaches equilibrium, insulating coating films containing phosphorus and oxygen are formed.

Heat treatment of an article formed by compacting a soft magnetic material including insulating coating films formed by the chemical conversion treatment method results in the transfer of oxygen in the insulating coating films into the iron-based particles because iron has a low affinity for oxygen. That is, as shown in Table I, the resulting dust core does not have sufficient resistance to heat treatment because of the use of the soft magnetic material having an insufficient ability to suppress the diffusion of oxygen.

Next, a method for producing an insulating coating film by a chemical conversion treatment method (chemical conversion treatment method 2 in Table I) other than the chemical conversion treatment method described above will be described. In this chemical conversion treatment method, for example, aluminum chloride is dissolved in an aqueous phosphoric acid solution to prepare an aqueous aluminum phosphate solution. Iron-based particles are immersed in the aqueous aluminum phosphate solution to dissolve natural oxide films formed on the surfaces of the iron-based particles. When the reaction reaches equilibrium, phosphoric acid ions and aluminum ions are not present as cations of aluminum phosphate ($Al_2(PO_4)_3$) but present as aluminum phosphate ($Al_2(PO_4)_3$). Thus, aluminum is not readily contained in the insulating coating films, so that it is difficult to form amorphous aluminum phosphate (-Al-P-O-).

Next, a method for producing an insulating coating film by a sol-gel method will be described. In the sol-gel method, a titanium alkoxide ($Ti\text{-}(O\text{-}R)_4$) is added to an organic solvent. Addition of water to the resulting mixture results in the hydrolysis of the titanium alkoxide, so that some of plural alkoxy groups (-O-R-) coordinated to titanium of the titanium alkoxide are converted into hydroxyl groups (-O-H), as shown in chemical formula 15. In chemical formulae 15 to 18, R represents an alkoxy moiety of the titanium alkoxide.

[Chem. 6]

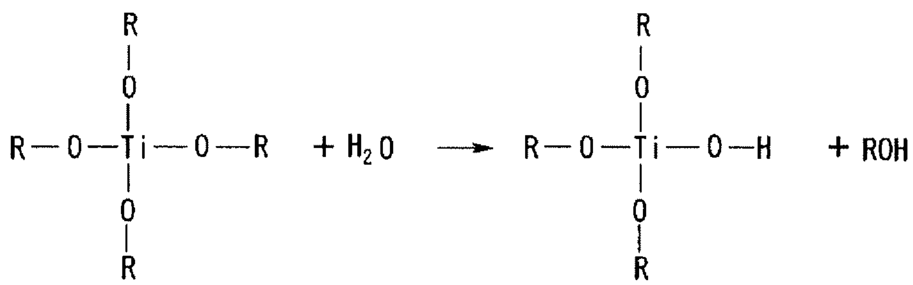

(chemical formula 15)

Iron having OH groups of natural oxide films formed on the surfaces of the iron-based particles and the titanium alkoxide having OH groups formed by hydrolysis are bonded to each other through O by dehydration condensation of OH of the natural oxide films formed on the surfaces of the iron-based particles and OH of the titanium alkoxide as shown in chemical formula 16. That is, iron atoms and titanium are bonded to each other through oxygen atoms. In chemical formula 16, iron having the OH groups of the natural oxide films is represented by FeOH because the proportion of the OH groups formed described above is low with respect to iron.

[Chem. 7]

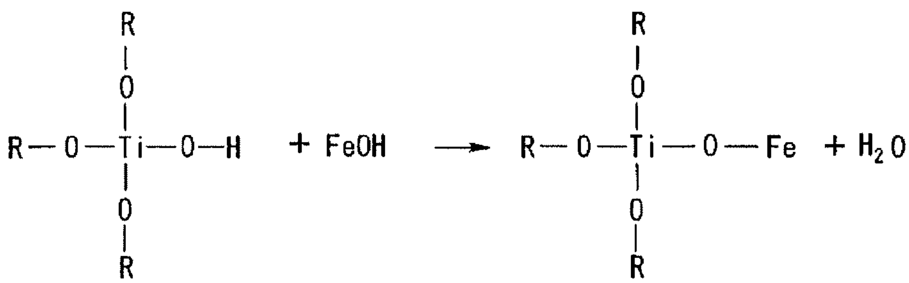

(chemical formula 16)

Then the insulating coating film can be grown by reactions of hydrolysis and dehydration condensation shown in chemical formulae 17 and 18 described below.

[Chem. 8]

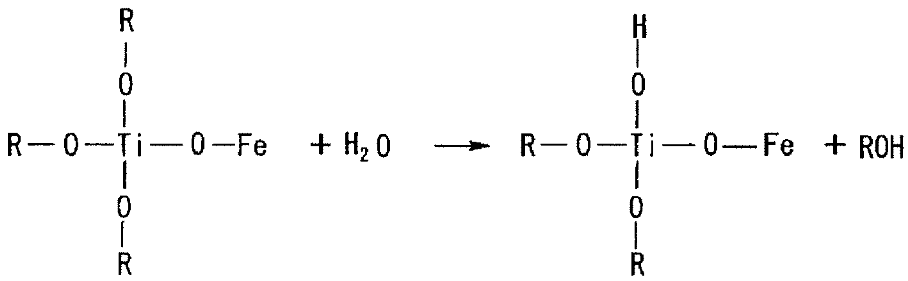

(chemical formula 17)

[Chem. 9]

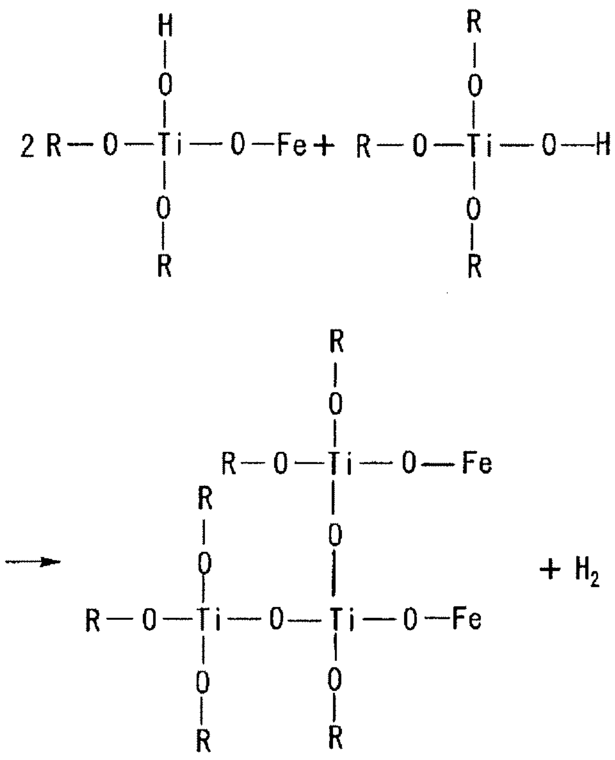

(chemical formula 18)

Referring to chemical formulae 15 to 18, in the sol-gel method, the titanium alkoxide is bonded to only a portion where OH of the natural oxide films on the surfaces of the iron-based particles 10 is present. That is, since the natural oxide films formed on the surfaces of the iron-based particles are not removed by an acid, the iron atoms and the titanium alkoxide are bonded to each other by dehydration condensation of the OH groups of the natural oxide films and the OH groups formed by hydrolysis of the titanium alkoxide. Thus, the number of the titanium alkoxide bonded depends on the number of the OH groups of the natural oxide films. As described above, the proportion of the OH groups in the natural oxide films is low with respect to iron. Thus, the bonding density of the titanium alkoxide (e.g., $Ti-(O-R)_3-O-$ formed by bonding the titanium alkoxide to iron) bonded to iron atoms on the surfaces of the iron-based particles is reduced. The

organic solvent is very slightly acidic. Thus, the natural oxide films formed on the iron-based particles are not removed in the organic solvent.

Heat treatment of an article formed by compacting a soft magnetic material including insulating coating films 122 formed by a sol-gel method causes the diffusion of iron atoms into the insulating coating films 122 because of the low bonding density of the insulating coating films 122 and the iron-based particles, thereby forming a current path. Note that the transfer of oxygen to the iron-based particles 10 is suppressed by titanium having a high affinity for oxygen. That is, as shown in Table I, the resulting dust core does not have sufficient resistance to heat treatment because of the use of the soft magnetic material having an insufficient ability to suppress the diffusion of iron attributed to the low bonding density of the insulating coating films and the iron-based particles.

Also in the sol-gel method, even if heat treatment for vaporizing carbon is performed, the heat resistance is improved by only a value equivalent to a reduction in heat resistance attributed to carbon removed. Substantially the same problem remains.

Table I summarizes the foregoing properties of the insulating coating films and the dust cores produced by the method for producing a dust core according to this embodiment and the method for producing a dust core according to the related art. Although some points are repeated, the properties of the soft magnetic materials and the dust cores produced by the respective methods described above will be described below with reference to Table I.

[Table I]

| Method | Composition of insulating coating film | Property of insulating coating film | | | | Property of dust core | |
|---|---|---|---|---|---|---|---|
| | | Film structure | Deformation resistance | Density of insulating coating film (ability to suppress diffusion of Fe | Heat resistance of insulating coating film (ability to suppress diffusion of O | Resistance to compacting | Resistance to heat treatment |
| Organic acid method (this embodiment) | Ti-0 | Crystal/ amorphous | Good | Good | Good | Good | Excellent |
| Chemical conversion treatment method 1 | Fe-P-0 | Amorphous | Excellent | Good | Fair | Excellent | Fair |
| Chemical conversion treatment method 2 | Al-P-0 | Crystal | Poor | Poor | - | - | - |
| Sol-gel method | Ti-0 | Amorphous | Good | Fair | Good | Good | Good |

As shown in Table I, the insulating coating films formed by chemical conversion treatment method 1 and composed of amorphous iron phosphate (-Fe-P-O-) contain iron having a low affinity for oxygen. Thus, the insulating coating films have the disadvantage that the bond between oxygen and iron having a low affinity for oxygen is cleaved, so that oxygen in the insulating coating films diffuses into the iron-based particles.

In chemical conversion treatment method 2, a reaction between aluminum and phosphoric acid proceeds preferentially compared with a reaction between ions of dissolved iron and phosphoric acid, so that a compound of aluminum and phosphoric acid (aluminum phosphate) is stabilized, thus leading to difficulty in forming the insulating coating films. Unlike the sol-gel method, aluminum phosphate does not have a OH group; hence, aluminum phosphate and OH groups constituting the natural oxide films formed on the iron-based particles are not subjected to dehydration condensation. The insulating coating films formed by chemical conversion treatment method 2 and composed of crystalline aluminum phosphate (-Al-P-O-) have the disadvantage that the density of aluminum contained in the insulating coating films is low. In this case, the diffusion of iron in the iron-based particles into the insulating coating films promotes the metallization of the insulating coating films, thereby reducing the electrical resistance of the insulating coating films and increasing eddy current loss.

In the insulating coating films formed by the sol-gel method and composed of amorphous titanium oxide (-Ti-O-), titanium is bonded through oxygen of the natural oxide films formed on the surfaces of the iron-based particles. Thus, the insulating coating films cannot have the amount of amorphous aluminum oxide exceeding the amount of bonds with oxygen of the natural oxide films. That is, the number of bonds between oxygen atoms constituting the insulating coating films and iron atoms is small. When heat treatment is performed, iron diffuses readily into the insulating coating films to form a current path, so that an insulating function is liable to be damaged.

Meanwhile, in the insulating coating films 20 formed ofthe organic acid method starting from the organic acid and composed of crystalline titanium oxide or amorphous titanium oxide according to this embodiment, the natural oxide films formed on the surfaces of the iron-based particles 10 are removed by the organic acid. Thus, the insulating coating films 20 are formed on the surfaces of the iron-based particles 10 by reaction of the organic acid and iron atoms to form chemical bonds between anions (COO') of the organic groups (for example, $A^2COO^-$ or $A^3COO^-$) derived from the organic acid and $Fe^{2+}$ of the iron-based particles 10. As a result, the bonding density of the organic groups derived from the organic acid containing titanium bonded to iron atoms of the iron-based particles 10 is increased, thus preventing the diffusion of iron atoms of the iron-based particles 10 into the insulating coating films. Furthermore, titanium has a higher affinity for oxygen than the affinity of iron for oxygen, thus preventing the dissociation or diffusion of oxygen from the insulating coating films 20. As a result, the dust core formed of the soft magnetic material advantageously has a high resistance to heat treatment and a high resistance to compacting.

Furthermore, the organic groups derived from the organic acid are ionically bonded to the iron atoms; hence, the bond strength is high. It is thus possible to suppress the detachment of the insulating coating films 20 from the iron-based particles 10, thereby improving resistance to compacting.

Note that while this embodiment is described using titanium as the substance (M), the same effect is also provided when the above-described substance (M) is used.

As described above, the soft magnetic material and the dust core according to this embodiment include the insulating coating films 20 each having the organic group derived from the organic acid containing at least one substance (M) selected from the group consisting of titanium, aluminum, silicon, calcium, magnesium, vanadium, chromium, strontium, and zirconium. The at least one substance in the insulating coating films 20 is bonded to iron of the iron-based particles 10 through the organic group derived from the organic acid of the insulating coating films 20.

According to the soft magnetic material and the dust core of the present invention, since the organic groups derived from the organic acid are contained, the natural oxide films formed on the surfaces of the iron-based particles 10 are removed. Unlike the sol-gel method limited to the number of the OH groups of the natural oxide films formed on the surfaces of the iron-based particles, in this embodiment, iron atoms of the iron-based particles 10 are ionically bonded to the organic groups derived from the organic acid without limitation of the number of the OH groups of the natural oxide films formed on the surfaces of the iron-based particles. The bonds of the iron-based particles 10 and the organic groups derived from the organic acid are not limited to the number of OH's of the natural oxide films, thus improving the bonding density of iron atoms and the organic groups derived from the organic acid at interfaces between the iron-based particles 10 and the insulating coating films 20. It is thus possible to suppress the diffusion of the iron atoms in the iron-based particles 10 into the insulating coating films 20 by the heat treatment of an article formed by compacting the soft magnetic material. Furthermore, the substance (M) in the insulating coating films 20 is covalently bonded to the organic group derived from the organic acid, so that the substance (M) is densely contained in the insulating coating films 20 formed on the surfaces of the iron-based particles 10. The substance has a higher affinity for oxygen than the affinity of iron for oxygen, thus suppressing the diffusion of oxygen atoms in the insulating coating films into the iron-based particles. It is thus possible to suppress the diffusion of the oxygen atoms in the insulating coating films 20 into the iron-based particles 10 by the heat treatment of an article formed by compacting the soft magnetic material. Hence, the suppression of the diffusion of the iron atoms in the iron-based particles 10 into the insulating coating films 20 and the suppression of the

diffusion of the oxygen atoms in the insulating coating films 20 into the iron-based particles 10 results in improvement in the heat resistance of the insulating coating films 20. As a result, the article formed by compacting the soft magnetic material can be subjected to heat treatment at a higher temperature. This eliminates distortions and dislocations in the iron-based particles, thereby reducing hysteresis loss.

Furthermore, the organic groups derived from the organic acid and the iron atoms are ionically bonded to each other; hence, the bond strength is high. It is thus possible to suppress the detachment of the insulating coating films 20 from the iron-based particles 10, thereby improving the resistance to compacting.

The method for producing a soft magnetic material according to this embodiment includes bringing an organic acid containing at least one substance (M) selected from the group consisting of titanium, aluminum, silicon, calcium, magnesium, vanadium, chromium, strontium, and zirconium into contact with surfaces of iron-based particles.

According to the method for producing a soft magnetic material of the present invention, the natural oxide films formed on the surfaces of the iron-based particles 10 can be removed by bringing the organic acid containing the substance (M) into contact with the surfaces of the iron-based particles 10. Thus, the iron atoms of the iron-based particles 10 are ionically bonded to the organic acid without limitation of the number of the OH groups of the natural oxide films formed on the surfaces of the iron-based particles 10. Furthermore, the substance (M) is covalently bonded to the organic acid; hence, the substance (M) is densely contained in the insulating coating films 20 by ionic bonding between the iron atoms and the organic acid. That is, the substance (M) is bonded to iron through the organic groups derived from the organic acid, so that the insulating coating films 20 containing the substance (M) and the organic groups derived from the organic acid can be formed on the surfaces of the iron-based particles 10.

The organic acid containing the substance (M) reacts with iron at the interfaces between the insulating coating films 20 and the iron-based particles 10 without limitation of the number of the OH groups of the natural oxide films, thereby improving the bonding density of the iron atoms of the iron-based particles 10 and the organic groups derived from the organic acid of the insulating coating films 20. It is thus possible to suppress the diffusion of the iron atoms in the iron-based particles 10 into the insulating coating films 20 by the heat treatment of an article formed by compacting the soft magnetic material.

Furthermore, the substance (M) is covalently bonded to the organic acid; hence, the substance (M) is densely contained in the insulating coating films 20 by ionic bonding between the iron atoms and the organic acid. The substance (M) has a higher affinity for oxygen than the affinity of iron for oxygen, thus suppressing the diffusion of the oxygen atoms in the insulating coating films 20 into the iron-based particles 10. It is thus possible to suppress the diffusion of the oxygen atoms in the insulating coating films 20 into the iron-based particles 10 by the heat treatment of an article formed by compacting the soft magnetic material.

Hence, the suppression of the diffusion of the iron atoms in the iron-based particles 10 into the insulating coating films 20 and the suppression of the diffusion of the oxygen atoms in the insulating coating films 20 into the iron-based particles 10 results in improvement in the heat resistance of the insulating coating films 20. As a result, the article formed by compacting the soft magnetic material can be subjected to heat treatment at a higher temperature. This eliminates distortions and dislocations in the iron-based particles, thereby reducing hysteresis loss.

Furthermore, the organic acid reacts with the iron atoms, so that the organic groups derived from the organic acid are ionically bonded to the iron atoms; hence, the bonding strength of the organic acid and iron is high. It is thus possible to form the insulating coating films 20 that are not readily detached from the iron-based particles 10. Hence, the dust core having improved resistance to compacting can be produced.

[EXAMPLES]

Examples of the present invention will be described below. In the examples, effects of improving the heat-resistance temperature and reducing the hysteresis loss of a dust core obtained by compacting a soft magnetic material of the present invention were studied. Furthermore, in the examples, effects of improving the heat-resistance temperature and reducing the hysteresis loss of a dust core produced by a method for producing a dust core of the present invention were studied. First, soft magnetic materials were produced in Examples 1 and 2 and Comparative Examples 1 to 4.

(Example 1)

In Example 1, production was performed according to the production method according to a first embodiment. Specifically, ABC 100.30 (manufactured by Höganäs AB) in which iron has a purity of 99.8% or higher and the average particle size was 80 μm was prepared as the iron-based particles 10. The iron-based particles 10 were immersed in titanium lactate (trade name "Orgatics TC 315", manufactured by Matsumoto Pharmaceutical Manufacture Co., Ltd.) to form the insulating coating films 20 containing $Ti(OH)_2(OCHCH_3COO)_2$ and having an average film thickness of 50 nm on surfaces of the iron-based particles 10. Then heat treatment for vaporizing a carbon element of the organic groups was performed at 500°C, thereby affording the soft magnetic material in Example 1.

(Example 2)

In Example 2, basically the same procedure as in Example 1 was performed, except that another insulating coating films surrounding surfaces ofthe insulating coating films were formed.

Specifically, 0.2% by weight of TSR116 (manufactured by GE Toshiba Silicones Co., Ltd.) and 0.1% by weight of XC96-B0446 (manufactured by GE Toshiba Silicones Co., Ltd.), which were silicone resins, were dissolved and dispersed in a xylene solvent. The composite magnetic particles 30 described above were added to the resulting solution. Then the resulting mixture was subjected to stirring treatment and drying treatment by evaporation in a room. Thereby, the insulating coating films 20b containing a silicone resin and having an average film thickness of 150 nm were formed so as to surround surfaces of the insulating coating films 20 having a main composition of Ti-O-Ti and an average film thickness of 50 nm.

(Comparative Example 1)

Comparative Example 1 was different from Example 1 only in that the insulating coating films were formed by a sol-gel method. Specifically, like Example 1, the iron-based particles 10 were prepared. The iron-based particles 10 were brought into contact with a titanium alkoxide (trade name: "Orgatics TA10", manufactured by Matsumoto Pharmaceutical Manufacture Co., Ltd.) to form the insulating coating films composed of amorphous titanium oxide.

(Comparative Example 2)

Comparative Example 2 was different from Example 2 only in that the insulating coating films were formed by a sol-gel method. Specifically, after the insulating coating films composed of amorphous titanium oxide were formed by the sol-gel method as in Comparative Example 1, insulating coating films composed of a silicone resin were further formed on the insulating coating films as in Example 2.

(Comparative Example 3)

Comparative Example 3 was different from Example 1 only in that the insulating coating films were formed by a chemical conversion treatment method and that the heat treatment for vaporizing the carbon element was not performed. Specifically, the iron-based particles 10 were prepared as in Example 1. The iron-based particles 10 were brought into contact with a phosphoric acid solution to form insulating coating films composed of amorphous iron phosphate.

(Comparative Example 4)

Comparative Example 4 was different from Example 2 only in that insulating coating films were formed by a chemical conversion treatment method and that the heat treatment for vaporizing the carbon element was not performed. Specifically, after the insulating coating films composed of amorphous iron phosphate were formed by the chemical conversion treatment method as in Comparative Example 3, insulating coating films composed of a silicone resin were further formed on the insulating coating films as in Example 2.

(Measurement Method)

Next, each of the soft magnetic materials produced in Examples 1 and 2 and Comparative Examples 1 to 4 was compacted at a surface pressure of 1280 MPa to form ring-like articles (outer diameter: 34 mm, inner diameter: 20 mm, and thickness: 5 mm). Each of the articles was subjected to heat treatment at 400°C, 450°C, 500°C, 550°C, 600°C, 650°C, or 700°C for 1 hour in a nitrogen atmosphere, thereby producing dust cores.

Each of the resulting dust cores was processed so as to have a number of primary winding turns of 300 and a number of secondary winding turns of 20. Hysteresis loss Kh, eddy current loss Ke, and iron loss W were measured with an AC-BH tracer. These measurements were performed at an excitation flux density of 10 kG (= 1.0 T (tesla)) and a measuring frequency of 400 Hz. Here, hysteresis loss and eddy current loss were separated by fitting a frequency curve of the iron loss with the following three formulae by a method of least squares to calculate a hysteresis loss coefficient and an eddy current loss coefficient. Table II shows the results. In Table II, the term " unmeasurable" used in iron loss indicates the iron loss exceeded 100 W/kg, which is the upper limit of measurement. The symbol "-" used in hysteresis loss and eddy current loss indicates that calculation was not made because of unmeasurable iron loss.

$$(\text{Iron loss}) = (\text{hysteresis loss coefficient}) \times (\text{frequency}) + (\text{eddy current loss coefficient}) \times (\text{frequency})^2$$

$$(\text{Hysteresis loss}) = (\text{hysteresis loss coefficient}) \times (\text{frequency})$$

$$(\text{eddy current loss}) = (\text{eddy current loss coefficient}) \times (\text{frequency})^2$$

[Table II]

| | Insulating coating film First layer | Insulating coating film Second layer | Heat treatment temperature °C | Hysteresis loss coefficient Kh (Bm=1.0T) mWs/kg | Eddy current loss coefficient Ke (Bm=1.0T) $mWs^2/kg$ | Iron loss $W_{10/400}$ (Bm=1.0T, f=400Hz) W/kg |
|---|---|---|---|---|---|---|
| Example 1 | Titanium lactate treatment Average film thickness=50nm | None | 400 | 107 | 0.038 | 49 |
| | | | 450 | 102 | 0.036 | 47 |
| | | | 500 | 92 | 0.044 | 44 |
| | | | 550 | 66 | 0.060 | 36 |
| | | | 600 | 62 | 0.169 | 52 |
| | | | 650 | 59 | 0.424 | 91 |
| | | | 700 | - | - | Unmeasurable |
| Example 2 | Titanium lactate treatment Average film thickness=50nm | Silicone resin Average film thickness=150nm | 400 | 103 | 0.021 | 45 |
| | | | 450 | 97 | 0.019 | 42 |
| | | | 500 | 81 | 0.024 | 36 |
| | | | 550 | 60 | 0.028 | 29 |
| | | | 600 | 53 | 0.031 | 26 |
| | | | 650 | 50 | 0.034 | 25 |
| | | | 700 | 52 | 0.135 | 42 |
| Comperative example 1 | Sol-gel treatment (Titanium alkoxide) Average film thickness=50nm | None | 400 | 109 | 0.032 | 49 |
| | | | 450 | 106 | 0.033 | 48 |
| | | | 500 | 97 | 0.036 | 45 |
| | | | 550 | 75 | 0.125 | 50 |
| | | | 600 | 70 | 0.362 | 86 |
| | | | 650 | - | - | Unmeasurable |
| | | | 700 | - | - | Unmeasurable |

(continued)

| | Insulating coating film First layer | Insulating coating film Second layer | Heat treatment temperature °C | Hysteresis loss coefficient Kh (Bm=1.0T) mWs/kg | Eddy current loss coefficient Ke (Bm=1.0T) $mWs^2/kg$ | Iron loss $W_{10/400}$ (Bm=1.0T, f=400Hz) W/kg |
|---|---|---|---|---|---|---|
| Comperative example 2 | Sol-gel treatment (Titanium alkoxide) Average film thickness=50nm | Silicone resin Average film thickness=150nm | 400 | 103 | 0.023 | 45 |
| | | | 450 | 101 | 0.022 | 44 |
| | | | 500 | 93 | 0.024 | 41 |
| | | | 550 | 72 | 0.026 | 33 |
| | | | 600 | 65 | 0.031 | 31 |
| | | | 650 | 61 | 0.196 | 56 |
| | | | 700 | - | - | Unmeasurable |
| Comperative example 3 | Phosphating treatment (Phosphoric acid solution) Average film thickness=50nm | None | 400 | 101 | 0.015 | 43 |
| | | | 450 | 94 | 0.016 | 40 |
| | | | 500 | 86 | 0.083 | 48 |
| | | | 550 | 69 | 0.250 | 68 |
| | | | 600 | - | - | Urrneasurable |
| | | | 650 | - | - | Unmeasurable |
| | | | 700 | - | - | Unmeasurable |
| Comparative example 4 | Phosphating treatment (Phosphoric acid solution) Average film thickness=50nm | Silicone resin Average film thickness=150nm | 400 | 98 | 0.015 | 42 |
| | | | 450 | 89 | 0.014 | 38 |
| | | | 500 | 82 | 0.014 | 35 |
| | | | 550 | 66 | 0.089 | 41 |
| | | | 600 | 63 | 0.226 | 61 |
| | | | 650 | - | - | Unmeasurable |
| | | | 700 | - | - | Unmeasurable |

(Measurement Result)

As shown in Table II, in Example 1, when the dust core including a single-layer insulating coating film but not including an insulating coating film composed of a silicone resin was subjected to heat treatment at 650°C, the insulating coating film was not damaged. Meanwhile, in Comparative Examples 1 and 3, in which each of the dust cores included a single-layer insulating coating film but did not include an insulating coating film composed of a silicone resin, the insulating coating films were damaged at 650°C and 600°C, respectively. Thus, in Example 1, heat treatment was performed at a higher temperature than those in Comparative Examples 1 and 3, thereby reducing the hysteresis loss. Furthermore, when the dust cores in Example 1 were subjected to heat treatment at these temperatures, a temperature at which the iron loss was minimized was 550°C. In contrast, in Comparative Examples 1 and 3, temperatures at which the iron loss was minimized were 500°C and 450°C, respectively. The results demonstrated that in Example 1, the heat-resistance temperature of the insulating coating film was improved. Moreover, according to the production method in Example 1, it was found that the heat-resistance temperature of the insulating coating film was improved. In addition, the minimum value of the iron loss in Example 1 was 36 W/kg, which was lower than the minimum values of the iron loss in Comparative Examples 1 and 3.

Furthermore, when each of the dust cores in Comparative Examples 1 and 3 was subjected to heat treatment at a high temperature of 550°C at which the iron loss was minimized in Example 1, the eddy current loss was higher than that in Example 1. The results demonstrated that in Example 1, the eddy current loss was maintained and the hysteresis loss was reduced when the heat treatment was performed at a high temperature, thereby reducing the iron loss.

Furthermore, for the dust core provided with the two layers of the insulating coating films including the insulating coating film composed of a silicone resin in Example 2, it was possible to performed heat treatment at 700°C. For the dust cores each provided with the two layers of the insulating coating films including the insulating coating film composed of a silicone resin Comparative Examples 2 and 4, the insulating coating films were damaged at 7000°C and 650°C, respectively. That is, in Example 2, the hysteresis loss was reduced compared with those in Comparative Examples 2 and 4. Moreover, when the dust cores in Example 2 were subjected to heat treatment at these temperatures, a temperature at which the iron loss was minimized was 650°C. In contrast, in Comparative Examples 2 and 4, temperatures at which the iron loss was minimized were 600°C and 500°C, respectively. The results demonstrated that in Example 2, the heat-resistance temperature of the insulating coating film was improved. According to the production method in Example 2, it was found that the heat-resistance temperature of the insulating coating film was improved. In addition, the minimum value of the iron loss in Example 2 was 25 W/kg, which was lower than the minimum values of the iron loss in Comparative Examples 2 and 4.

In particular, a comparison between Examples 1 and 2 showed that the dust core provided with the insulating coating film containing ($Ti(OH)_2(OC_2H_4COO)_2$) as the organic group derived from the organic acid containing the substance described above and another insulating coating film surrounding the surface of the insulating coating film had significantly improved heat resistance and further reduced hysteresis loss and iron loss. Furthermore, a comparison between Examples 1 and 2 showed that the dust core produced by performing the step of forming another insulating coating film surrounding the surface of the insulating coating film containing $Ti(OH)_2(OC_2H_4COO)_2$ formed by bringing $Ti(OH)_2(OCHCH_3COOH)_2$ into contact with the surface of each iron-based particle 10 had significantly improved heat resistance and further reduced hysteresis loss and iron loss.

As described above, the results of these examples demonstrated as follows: Since the insulating coating film contained the organic groups derived from the organic acid containing the substance (M) having a high affinity for oxygen, the at least one substance in the insulating coating film was bonded to iron in the iron-based particles through the organic group derived from the organic acid of the insulating coating film. It was thus possible to improve the heat resistance of the dust core produced from the soft magnetic material including the insulating coating film when the heat treatment for vaporizing carbon from the insulating coating film was performed. From the results, furthermore, according to the present invention, when the insulating coating film contains the organic groups derived from the organic acid containing the substance (M) having a high affinity for oxygen, the density of the substance (M) in the insulating coating film can probably be increased.

Moreover, the results of these examples demonstrated that when the heat treatment for vaporizing carbon from the insulating coating films was further performed by bringing the organic acid containing the substance (M) into contact with the surfaces of the iron-based particles, the heat resistance of the dust core produced from the soft magnetic material including the insulating coating films was improved. Therefore, it was speculated that by bringing the organic acid containing the substance (M) into contact with the surfaces of the iron-based particles, at least one substance in the insulating coating films was bonded to iron of the iron-based particles through the organic groups derived from the organic acid of the insulating coating films.

Embodiments and Examples disclosed herein should be construed as being illustrative but not restrictive in all aspects. The scope of the invention is shown not by the foregoing embodiments but by Claims and it is intended to include all changes which fall within meanings and scopes equivalent to Claims.

Industrial Applicability

The soft magnetic material and the dust core of the present invention are generally used for motor cores, solenoid valves, reactors, electromagnetic components, and the like. Furthermore, the soft magnetic material and the dust core produced by the method for producing a soft magnetic material and the method for producing a dust core are used for motor cores, solenoid valves, reactors, electromagnetic components, and the like.

## Claims

**1.** A soft magnetic material comprising:

a plurality of composite magnetic particles (30) each including an iron-based particle (10) containing iron, and an insulating coating film (20) surrounding a surface of the iron-based particle (10),
wherein the insulating coating film (20) contains an organic group derived from an organic acid having at least one substance selected from the group consisting of titanium, aluminum, silicon, calcium, magnesium, vanadium, chromium, strontium, and zirconium, and
wherein the at least one substance in the insulating coating film (20) is bonded to iron in the iron-based particles (10) through the organic group derived from the organic acid in the insulating coating film (20).

**2.** The soft magnetic material according to Claim 1, wherein the insulating coating films (20) have an average film thickness of 20 nm to 200 nm.

**3.** The soft magnetic material according to Claim 1, wherein the iron-based particles (10) have an average particle size of 5 μm to 500 μm.

**4.** The soft magnetic material according to Claim 1,
wherein the insulating coating film (20) is a first insulating coating film (20a), and the soft magnetic material further comprises another insulating coating film (20b) surrounding a surface of the first insulating coating film (20a),
wherein another insulating coating film (20b) is composed of at least one selected from thermoplastic resins, thermosetting resins, and salts of higher fatty acids.

**5.** A dust core produced from the soft magnetic material according to Claim 1.

**6.** A method for producing a soft magnetic material, comprising the steps of:

preparing iron-based particles (10) containing iron; and
forming an insulating coating film (20) surrounding a surface of each of the iron-based particles (10),
wherein in the step of forming the insulating coating film (20), an organic acid containing at least one substance selected from the group consisting of titanium, aluminum, silicon, calcium, magnesium, vanadium, chromium, strontium, and zirconium is brought into contact with the surface of each of the iron-based particles.

**7.** The method for producing a soft magnetic material according to Claim 6, further comprising a step of subjecting the insulating coating film (20) to heat treatment after the step of forming the insulating coating film (20).

**8.** The method for producing a soft magnetic material according to Claim 6, wherein in the step of forming the insulating coating film (20), insulating coating film (20) having an average film thickness of 20 nm to 200 nm is formed.

**9.** The method for producing a soft magnetic material according to Claim 6, wherein in the step of preparing the iron-based particles (10), iron-based particles (10) having an average particle size of 5 μm to 500 μm are prepared.

**10.** The method for producing a soft magnetic material according to Claim 6, further comprising a step of forming another insulating coating film (20b) surrounding a surface of the insulating coating film (20),
wherein in the step of forming another insulating coating film (20b), another insulating coating film (20b) composed of at least one selected from thermoplastic resins, thermosetting resins, and salts of higher fatty acids.

**11.** A method for producing a dust core, comprising the steps of:

producing a soft magnetic material by the method for producing a soft magnetic material according to Claim 6,
compacting the soft magnetic material into an article; and
subjecting the article to heat treatment.

FIG. 1

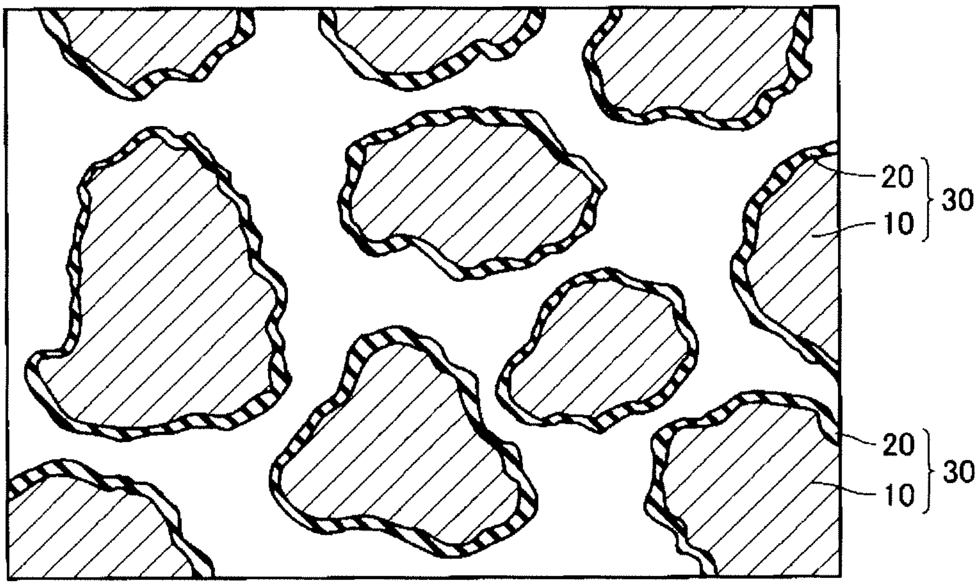


FIG. 2

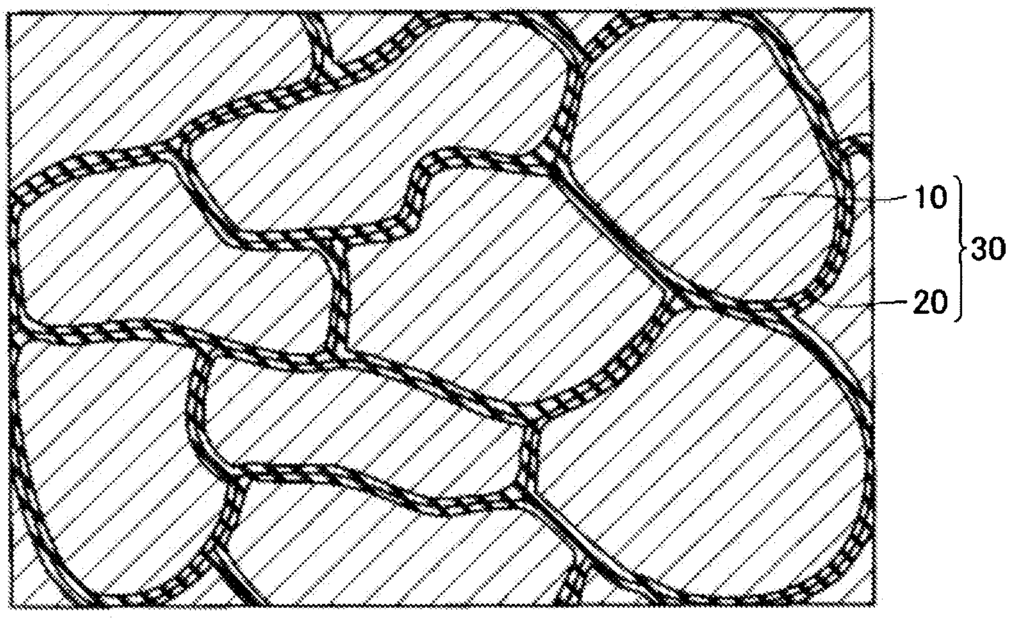

FIG. 3

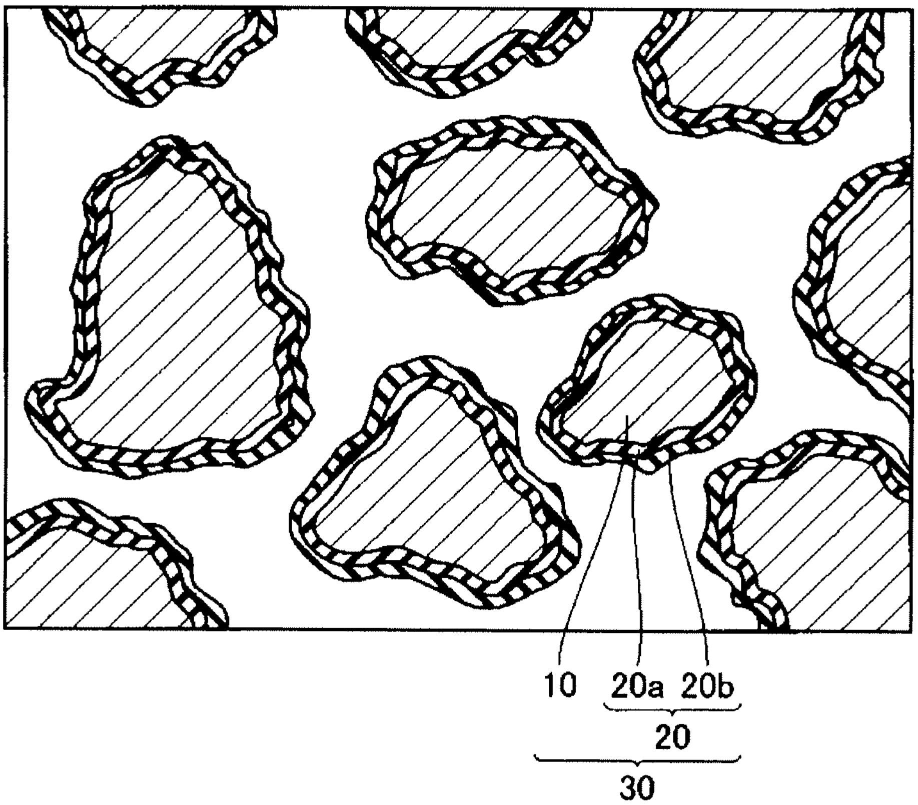


FIG. 4

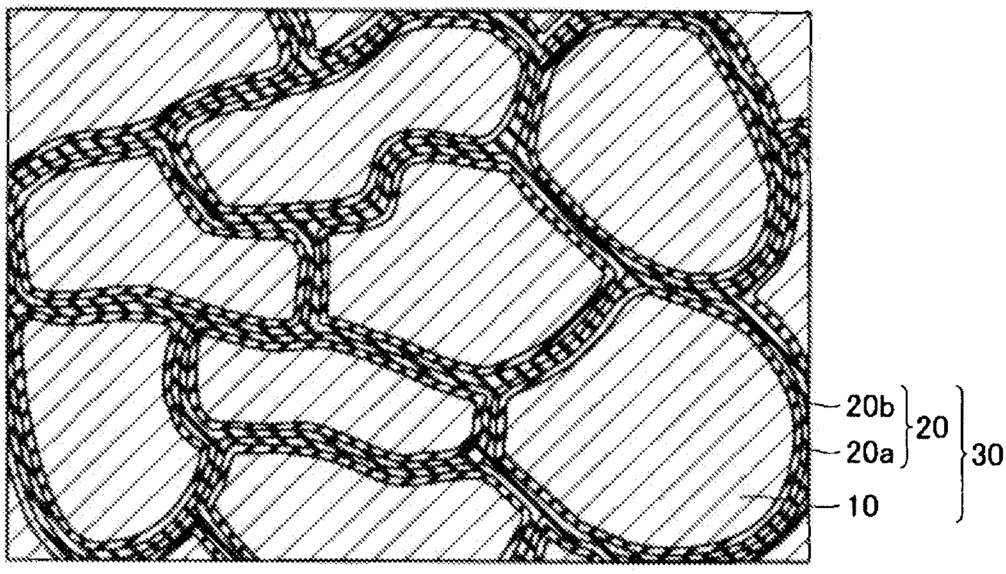

FIG. 5

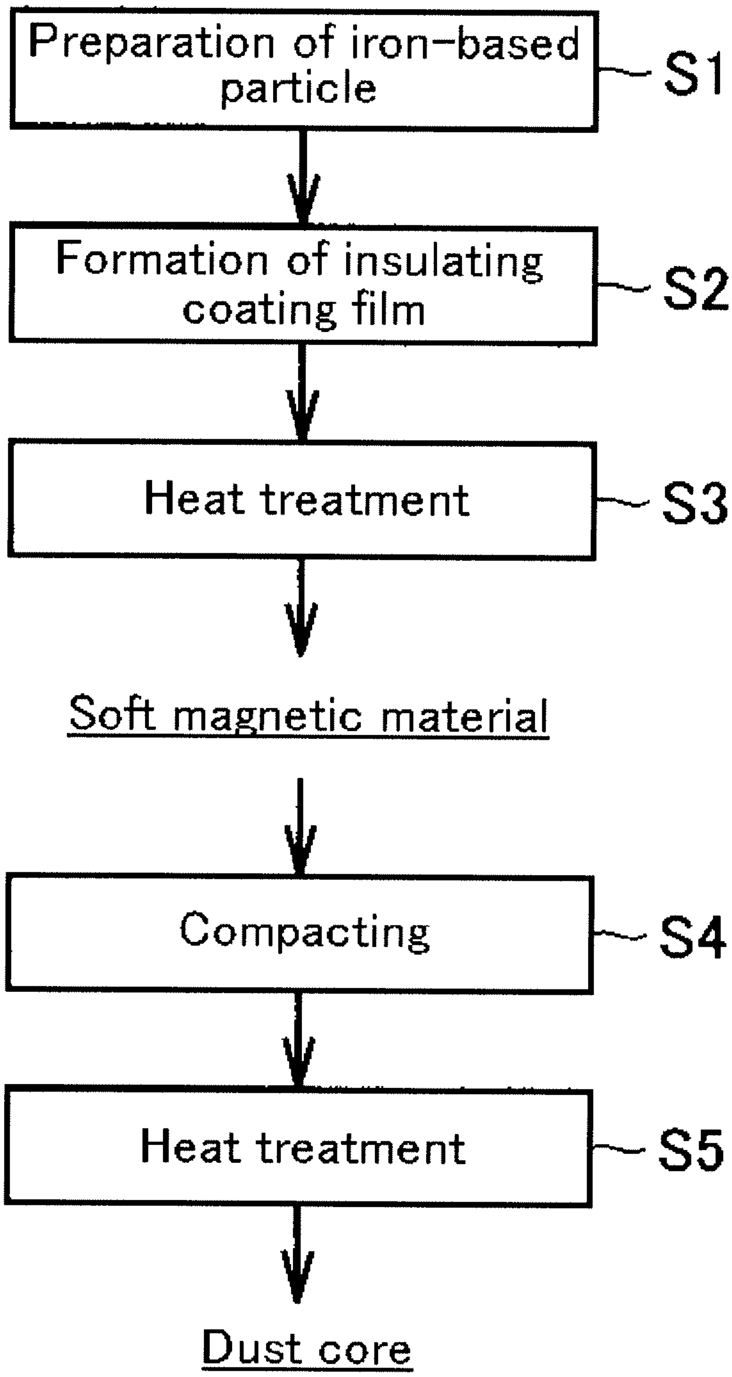
Preparation of iron-based particle
S1
Formation of insulating coating film
S2
Heat treatment
S3
Soft magnetic material
Compacting
S4
Heat treatment
S5
Dust core

FIG. 6

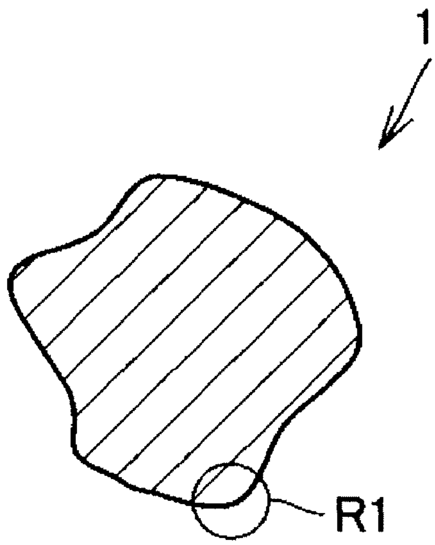


FIG. 7

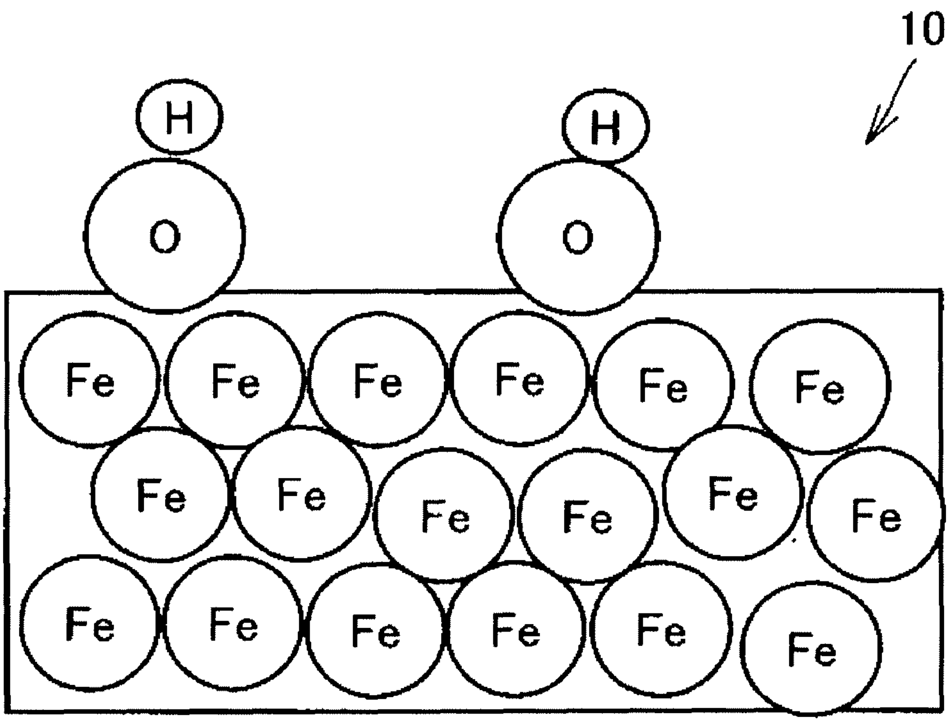

**INTERNATIONAL SEARCH REPORT**

International application No.
PCT/JP2008/065168

A. CLASSIFICATION OF SUBJECT MATTER
*H01F1/24*(2006.01)i, *H01F1/26*(2006.01)i, *H01F41/02*(2006.01)i

According to International Patent Classification (IPC) or to both national classification and IPC

B. FIELDS SEARCHED

Minimum documentation searched (classification system followed by classification symbols)
H01F1/24, H01F1/26, H01F41/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-303711 A (JFE Steel Corp.), 24 October, 2003 (24.10.03), Par. Nos. [0019] to [0028], [0048] to [0075] & US 2003/77448 A1 & EP 1246209 A3 | 1-11 |
| A | JP 2006-202956 A (Sumitomo Electric Industries, Ltd.), 03 August, 2006 (03.08.06), Full text; all drawings & EP 1840907 A1 & WO 2006/77957 A1 | 1-11 |
| A | JP 2003-37018 A (Daido Steel Co., Ltd.), 07 February, 2003 (07.02.03), Full text (Family: none) | 1-11 |

☒ Further documents are listed in the continuation of Box C.　　☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 12 November, 2008 (12.11.08) | 25 November, 2008 (25.11.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/065168

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-60235 A (Ajinomoto Co., Inc.), 03 March, 1998 (03.03.98), Full text (Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000504785 A
- JP 2005206880 A
- JP 2006089791 A